# EUROPÄISCHE PATENTSCHRIFT

(11) **EP 1 614 863 B1**
(45) Veröffentlichungstag und Bekanntmachung des Hinweises auf die Patenterteilung: **03.01.2007**
(21) Anmeldenummer: 05013630.8
(22) Anmeldetag: 24.06.2005
(51) Int. Cl.: F01D 11/08, F01D 5/14, F01D 5/20, F04D 27/02, F04D 29/54, F04D 29/42

(54) **Strömungsstruktur für einen Turboverdichter**
Fluid structure for a turbocompressor
Structure de fluide d'un turbocompresseur

(30) Priorität: 08.07.2004 DE 102004032978
(43) Veröffentlichungstag der Anmeldung: 11.01.2006
(73) Patentinhaber: MTU Aero Engines GmbH, 80995 München (DE)
(72) Erfinder: Seitz, Peter, 81241 Pasing (DE)

(56) Entgegenhaltungen:
- EP-A- 0 526 965
- GB-A- 504 214
- US-B1- 6 302 640
- PATENT ABSTRACTS OF JAPAN Bd. 009, Nr. 022 (M-354), 30. Januar 1985 (1985-01-30) & JP 59 168296 A (HITACHI SEISAKUSHO KK), 21. September 1984 (1984-09-21)

## Beschreibung

Die Erfindung betrifft eine Strömungsstruktur für einen Turboverdichter nach dem Oberbegriff des Patentanspruchs 1. Des weiteren betrifft die Erfindung einen Turboverdichter sowie ein Flugtriebwerk und eine stationäre Gasturbine.

Strömungsstrukturen bzw. Zirkulationsstrukturen für Turboverdichter sind in Form sogenannter "Casing Treatments" und "Hub Treatments" bekannt. Die "Casing Treatments" und "Hub Treatments" genannten Strömungsstrukturen haben primär die Aufgabe, den aerodynamisch stabilen Betriebsbereich des Verdichters durch eine Optimierung des Pumpgrenzabstandes zu erhöhen. Ein optimierter Pumpgrenzabstand ermöglicht höhere Verdichterdrücke und somit eine höhere Verdichterbelastung. Die für einen örtlichen Strömungsabriss und letztendlich für das Pumpen des Verdichters verantwortlichen Störungen treten an gehäuseseitigen Enden der Laufschaufeln einer bzw. mehrerer Verdichterstufen bzw. an den nabenseitigen, radial innenliegenden Enden der Leitschaufeln auf, da in diesen Bereichen die aerodynamische Belastung im Verdichter am höchsten ist. Durch Strömungsstrukturen bzw. Zirkulationsstrukturen wird die Strömung im Bereich der Schaufelenden stabilisiert. Dabei erlauben derartige Zirkulationsstrukturen einerseits eine Strömung in axialer Richtung und andererseits einen Strömungsdurchtritt in Umfangsrichtung. Strömungsstrukturen im Bereich der gehäuseseitigen Enden der Laufschaufeln bezeichnet man als "Casing Treatments", Strömungsstrukturen im Bereich der nabenseitigen Enden der Leitschaufeln bezeichnet man als "Hub Treatments".

Die DE 33 22 295 C3 offenbart einen Axialventilator mit einer Zirkulationsstruktur. Der Axialventilator gemäß DE 33 22 295 C3 umfasst eine Ringkammer, die konzentrisch zu einer Achse des Axialventilators im Bereich von freien Enden eines Laufschaufelkranzes angeordnet ist, wobei sich die Ringkammer radial an einen Hauptströmungskanal anschließt. In der Ringkammer sind Leitelemente fest angeordnet. Die Zirkulationsstruktur gemäß diesem Stand der Technik ermöglicht eine Strömung in axialer Richtung sowie in Umfangsrichtung. Charakteristisch für diese Art von Zirkulationsstrukturen ist ein mit der Kontur des Hauptströmungskanals fluchtender, geschlossener Ring, der den hinteren Eintrittsbereich der Zirkulationsstruktur vom vorderen Austrittsbereich derselben trennt und einen glatten, geschlossenen Oberflächenbereich bildet.

Die US 5,282,718 offenbart ein "Casing Treatment" mit in einer Ringkammer angeordneten Leitelementen. Auch bei diesem "Casing Treatment" sind Eintrittsbereich und Austrittsbereich der Zirkulationsstruktur durch einen massiven, zu den Schaufeln hin glatten und geschlossenen Ring getrennt. Derartige Ringe im Schaufelbereich müssen für den Fall der Berührung mit den Schaufelspitzen mit einem Anstreif bzw. Einlaufbelag versehen werden.

Ein weiteres "Casing Treatment" ist aus der US 5,137,419 bekannt. Bei der dort offenbarten Zirkulationsstruktur zur Verbesserung des Pumpgrenzabstandes eines Kompressors in Axialbauweise sind axiale bzw. axial schräge Nuten vorhanden. Bei der dort offenbarten Zirkulationsstruktur ist jedoch kein Strömungsdurchtritt in Umfangsrichtung möglich.

Weitere Zirkulationsstrukturen für Turboverdichter sind aus der US 4,511,308 sowie der DE 35 39 604 C1, US 6 302 640, JP 59 168 296, GB 504 214 und der EP 0 526 965 bekannt.

Weiterhin ist es bereits Stand der Technik, im Verdichterbereich zwischen benachbarten Leitschaufelkränzen und Laufschaufelkränzen durch Öffnungen im Verdichtergehäuse - durch sogenannte "Bleed Slots" - Luft abzuzweigen, die zum Beispiel als Kabinenluft oder als Kühlluft für die Turbine verwendet wird. Hierdurch werden jedoch die Strömungsverhältnisse am stromabwärts liegenden Laufschaufelgitter im Sinne einer Verringerung des Pumpgrenzabstands negativ beeinflusst.

Hiervon ausgehend liegt der vorliegenden Erfindung das Problem zu Grunde, eine neuartige Strömungsstruktur für einen Turboverdichter zu schaffen, die insbesondere ein Abzweigen von Verdichterluft ohne strömungstechnische Nachteil ermöglicht.

Dieses Problem wird dadurch gelöst, dass die eingangs genannte Strömungsstruktur durch die Merkmale des kennzeichnenden Teils des Patentanspruchs 1 weitergebildet ist. Erfindungsgemäß ist im Bereich wenigstens einer der Wände mindestens eine Öffnung angeordnet, die einen Strömungsdurchtritt aus der Ringkammer heraus ermöglicht, wobei mindestens eine Verdichterkammer zur Aufnahme der austretenden Luft vorhanden ist.

Die erfindungsgemäße Strömungsstruktur wirkt zumindest teilweise als Casing Treatment bzw. Hub Treatment mit allen diesbezüglichen Vorteilen und ermöglicht ein strömungstechnisch optimiertes Abzweigen von Luft. Die Erfindung ermöglicht demnach einerseits eine Luftzirkulation und andererseits ein Abzweigen von Luft. Wird keine Luft abgezweigt, wirkt dieselbe ausschließlich als Casing Treatment bzw. Hub Treatment.

Nach einer vorteilhaften Weiterbildung der Erfindung begrenzen die Leitelemente einerseits vorwiegend in axialer Richtung verlaufende Strömungskanäle und andererseits mindestens einen in Umfangsrichtung verlaufenden Strömungskanal, wobei die oder jede Öffnung an einem stromaufwärtsliegenden Ende der in axialer Richtung verlaufenden Strömungskanäle angeordnet ist.

Vorzugsweise ist ein Medium, nämlich Luft, welches über die in axialer Richtung verlaufenden Strömungskanäle und über die oder jede Öffnung in die Verdichterkammer einströmt über eine Austrittsöffnung aus der Verdichterkammer abführbar.

Der erfindungsgemäße Turboverdichter ist durch die Merkmale des Patentanspruchs 17 definiert, das erfindungsgemäße Flugtriebwerk ist in Patentanspruch 18 und die erfindungsgemäße stationäre Gasturbine ist in Patentanspruch 19 definiert.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:
- Fig. 1:: einen Teillängsschnitt durch einen Verdichter in Axialbauweise im Bereich einer erfindungsgemäßen, gehäuseseitigen Strömungsstruktur;
- Fig. 2:: einen Teilquerschnitt durch die Anordnung gemäß Fig. 1 entlang Schnittrichtung I-I in Fig. 1;
- Fig. 3:: einen Teilquerschnitt durch die Anordnung gemäß Fig. 1 entlang Schnittrichtung II-II in Fig. 1;
- Fig. 4:: einen Teillängsschnitt durch einen Verdichter in Axialbauweise im Bereich einer erfindungsgemäßen, nabenseitigen Strömungsstruktur.

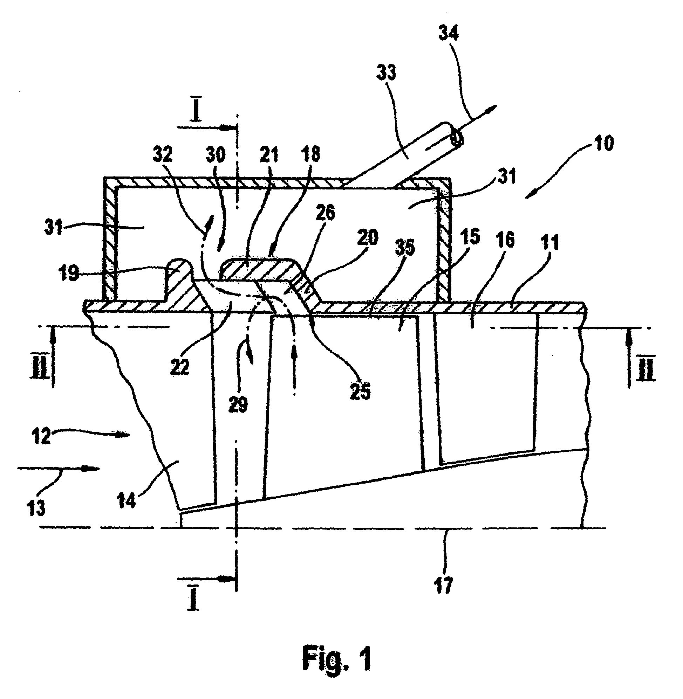

Nachfolgend wird die hier vorliegende Erfindung unter Bezugnahme auf Fig. 1 bis 4 in größerem Detail beschrieben.

Fig. 1 zeigt einen Teillängsschnitt durch einen Verdichter 10 in Axialbauweise, wobei ein Gehäuse 11 des Verdichters 10 einen Hauptströmungskanal 12 begrenzt. Die Strömungsrichtung durch den Hauptströmungskanal 12 ist in Fig. 1 durch einen Pfeil 13 visualisiert.

Im Hauptströmungskanal 12 sind in axialer Richtung hintereinander mehrere feststehende Leitschaufeln sowie mehrere rotierende Laufschaufeln angeordnet. So zeigt der Ausschnitt aus dem Verdichter 10 gemäß Fig. 1 einen ersten Leitschaufelkranz 14, wobei in Strömungsrichtung hinter diesem ersten Leitschaufelkranz 14 ein Laufschaufelkranz 15 und in Strömungsrichtung hinter dem Laufschaufelkranz 15 wiederum ein Leitschaufelkranz 16 im Hauptströmungskanal 12 angeordnet ist. Die rotierenden Laufschaufeln des Laufschaufelkranzes 15 rotieren zusammen mit einem Rotor gegenüber dem feststehenden Gehäuse 11 sowie gegenüber den feststehenden Leitschaufeln der Leitschaufelkränze 14 und 16. Eine Drehachse des Rotors, mit welchem die Laufschaufeln rotieren, ist in Fig. 1 mit der Bezugsziffer 17 gekennzeichnet.

An den Hauptströmungskanal 12 grenzt gemäß Fig. 1 in radialer Richtung eine Ringkammer 18 an. Die Ringkammer 18 wird von einer axial vorderen Wand 19, einer axial hinteren Wand 20 sowie einer radial außenliegenden Wand 21 begrenzt. Die axial vordere Wand 19 und die axial hintere Wand 20 verlaufen im Wesentlichen in radialer Richtung. Die radial außenliegende Wand 21 verläuft im Wesentlichen in axialer Richtung. Die Ringkammer 18 ist im gezeigten Ausführungsbeispiel den gehäuseseitigen Enden 35 der Laufschaufeln des Laufschaufelkranzes 15 zugeordnet. Es sei darauf hingewiesen, dass eine derartige Ringkammer auch nabenseitigen, radial innenliegenden Enden der Leitschaufeln der Leitschaufelkränze 14 und 16 zugeordnet sein kann.

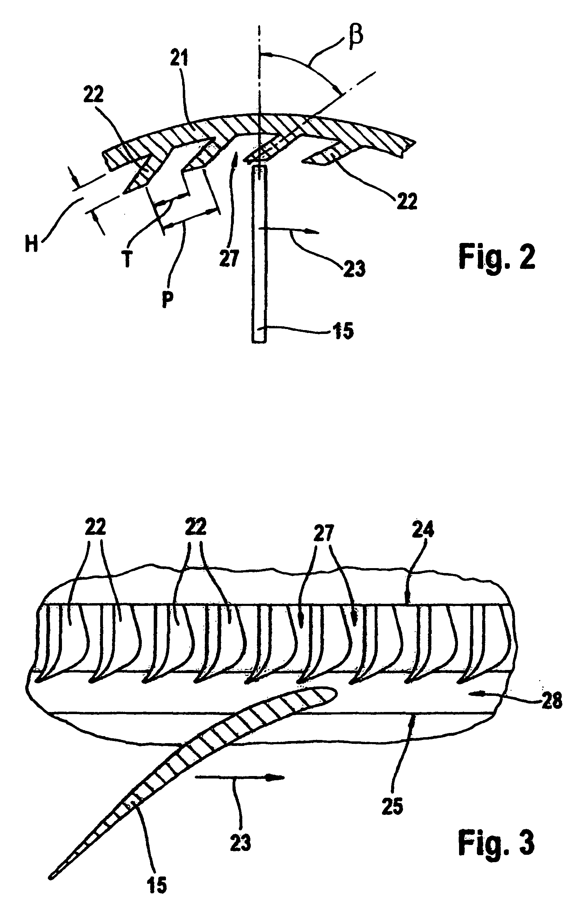

In der Ringkammer 18 sind Leitelemente 22 angeordnet. Der Darstellung gemäß Fig. 2 kann entnommen werden, dass die Leitelemente 22 um einen Winkel β gegenüber den Laufschaufeln des Laufschaufelkranzes 15 bzw. gegenüber einer Radialen geneigt sind. Die Darstellung gemäß Fig. 2 zeigt die Leitelemente in axialer Blickrichtung. In Umfangsrichtung sind dieselben um den Winkel β gegenüber den Laufschaufeln des Laufschaufelkranzes 15 geneigt. Der Winkel β ist dabei so gewählt, dass ein Strömungsaustritt aus dem Hauptströmungskanal 12 in die Ringkammer 18 hinein strömungstechnisch erleichtert ist und demnach ohne größere Verluste erfolgt. Die Drehrichtung des Laufschaufelkranzes 15 ist in Fig. 2 mit dem Pfeil 23 gekennzeichnet. An dieser Stelle sei angemerkt, dass der Neigungswinkel β nicht wie im gezeigten Ausführungsbeispiel in Umfangsrichtung konstant sein muss, sondern sich vielmehr in Umfangsrichtung ändern kann. Die Leitelemente verfügen dann in Umfangsrichtung über einen gekrümmten Verlauf. Der Neigungswinkel β kann von radial innen nach außen bis auf einen Wert "Null" abnehmen, bei entsprechend gekrümmten Leitelementen. In jedem Fall ist der Winkel β so gewählt, dass der Strömungseintritt in die Ringkammer 18 optimiert erfolgt. Wie Fig. 2 entnommen werden kann, sind die Leitelemente 22 nicht nur durch den Winkel β gekennzeichnet sondern vielmehr auch durch ihre radiale Höhe H sowie ihren Abstand in Umfangsrichtung, der durch die Kenngrößen T und P definiert wird.

Die Leitelemente 22 sind schaufelartig ausgeführt und verfügen über ein räumlich gekrümmtes Profil mit variierender Dicke. Dies kann insbesondere der Darstellung gemäß Fig. 3 entnommen werden. Fig. 3 zeigt die Profilierung der Leitelemente 22 sowie der Laufschaufeln des Laufschaufelkranzes 15, wobei die Drehrichtung des Laufschaufelkranzes 15 wiederum durch den Pfeil 23 visualisiert ist. In Fig. 3 ist zu erkennen, dass der Strömungsaustritt im Bereich einer stromaufwärtigen Kante 24 der Ringkammer 18 in Relation zum Laufschaufelkranz 15 mit Gegendrall erfolgen soll. Eine stromabwärtige Kante der Ringkammer 18 ist in Fig. 3 mit der Bezugsziffer 25 bezeichnet.

Wie Fig. 1 entnommen werden kann, erstrecken sich die Leitelemente 22 innerhalb der Ringkammer 18 nicht über die gesamte axiale Länge der Ringkammer 18, vielmehr lassen die Leitelemente 22 im Bereich der axial hinteren Wand 20 - also an der stromabwärtigen Kante 25 - eine Aussparung 26 frei. Die Leitelemente 22 begrenzen demnach mehrere in axialer Richtung verlaufende Strömungskanäle 27 sowie einen sich in Umfangsrichtung erstreckenden Strömungskanal 28. Innerhalb der Ringkammer 18 ist demnach zusätzlich zu der vorwiegend in axialer Richtung verlaufenden Rezirkulation eine Strömung in Umfangsrichtung möglich. Die in axialer Richtung verlaufende Rezirkulation ist in Fig. 1 durch den Pfeil 29 gekennzeichnet.

An dieser Stelle sei angemerkt, dass im Unterschied zum gezeigten Ausführungsbeispiel in der Ringkammer auch Leitelemente angeordnet sein können, die sowohl im Bereich der axial vorderen Wand 19 als auch im Bereich der axial hinteren Wand 20 Ausnehmungen freilassen, die Strömungsdurchtritte in Umfangsrichtung ermöglichen. Im Ausführungsbeispiel der Fig. 1 ist lediglich im Bereich der axial hinteren Wand 20 eine derartige Ausnehmung 26 vorgesehen. Weiterhin ist es im Sinne der Erfindung möglich, dass die durch die Leitelemente definierte Ausnehmung zur Gewährleistung eines Strömungsdurchtritts in Umfangsrichtung ausschließlich im Bereich der axial vorderen Wand 19 positioniert ist.

Fig. 1 kann entnommen werden, dass dem Hauptströmungskanal 12 zugewandte Enden der Leitelemente 22 auf einer Kontur des Hauptströmungskanals 12 verlaufen und axial mit freien Enden 35 der Schaufeln des Laufschaufelkranzes 15 überlappen. Die dem Hauptströmungskanal 12 zugewandten Enden der Leitelemente 22 weisen dabei in radialer Richtung einen solchen Abstand von den freien Enden 35 der Laufschaufeln des Laufschaufelkranzes 15 auf, dass im Normalbetrieb des Turboverdichters die Leitelemente 22 die freien Enden 35 der Laufschaufeln des Laufschaufelkranzes 15 nicht berühren. An dieser Stelle sei darauf hingewiesen, dass die Leitelemente 22 aus einem Metall, wie Stahl, oder einer Nickelbasislegierung oder einer Kobaltbasislegierung bestehen können. Weiterhin ist es möglich, die Leitelemente 22 aus einem Leichtmetall, wie Aluminium, oder einem Kunststoff, wie Thermoplaste, Duroplaste oder Elastomere, herzustellen. Die Ringkammer 18 kann einschließlich der Leitelemente 22 einstückig oder als zumindest zwei in Umfangsrichtung aneinandergrenzende Segmente ausgeführt werden. In dem Fall, in dem die Ringkammer 18 sowie die Leitelemente 22 als zwei Segmente ausgeführt sind, sind die Leitelemente 22 lösbar in der Ringkammer 18 befestigt.

Im Sinne der hier vorliegenden Erfindung ist in einem in Hauptströmungsrichtung 16 gesehen stromaufwärtigen Bereich der Ringkammer 18 mindestens eine Öffnung 30 angeordnet, die einen Strömungsdurchtritt aus der Ringkammer 18 heraus in eine Verdichterkammer 31 ermöglicht. Im Ausführungsbeispiel der Fig. 1 ist die Öffnung bzw. Ausnehmung 30 in die im Wesentlichen in axialer Richtung verlaufende Wand 21 der Ringkammer 18 integriert. Die Öffnung 30 ist dabei in einen Bereich der radial außenliegenden Wand 21 eingebracht, der sich an die axial vordere Wand 19 anschließt. Die oder jede Öffnung 30 im Bereich der im Wesentlichen in axialer Richtung verlaufenden Wand 21 ist demnach an einem stromaufwärtsliegenden Ende angeordnet. Die oder jede Öffnung 30 im Bereich der im Wesentlichen in axialer Richtung verlaufenden Wand 21 der Ringkammer 18 ermöglicht einen Strömungsdurchtritt in radialer Richtung aus der Ringkammer 18 heraus in eine Verdichterkammer 31. Die Verdichterkammer 31 kann auch als Verdichtervorkammer bezeichnet werden. Der Strömungsdurchtritt aus der Ringkammer 18 in die Verdichterkammer 31 ist in Fig. 1 durch den Pfeil 32 gekennzeichnet. Die Strömung im Bereich der Ringkammer 18 dient demnach einerseits der Rezirkulation zurück in den Hauptströmungskanal 12 und andererseits einer Zirkulation aus dem Hauptströmungskanal 12 heraus in die Verdichtervorkammer 31.

Im Unterscheid zum gezeigten Ausführungsbeispiel ist es auch möglich die oder jede Öffnung 30 in die axial vordere Wand 19 einzubringen. Auch dann ist die Öffnung in einem stromaufwärtigen Bereich der Ringkammer 18 angeordnet.

Gemäß Fig. 1 ist das aus der Ringkammer 18 in die Verdichterkammer 31 strömende Medium über eine Austrittsöffnung 33 aus der Verdichterkammer 31 heraus abführbar, was in Fig. 1 durch einen Pfeil 34 bezeichnet ist. Die Verdichterkammer 31 schließt sich radial an die Ringkammer 18 an und umschließt die Ringkammer 18 radial außen.

Im Zusammenhang mit dem Ausführungsbeispiel der Fig. 1 bis 3 sei an dieser Stelle darauf hingewiesen, dass die axiale Mitte der Ringkammer 18 stromaufwärts der axialen Mitte des zugeordneten Laufschaufelkranzes 15 liegt. Hierunter soll verstanden werden, dass die axiale Mitte der Ringkammer 18 an der zugeordneten Wand des Hauptströmungskanals 12 stromaufwärts der axialen Mitte der freien Enden 35 der Laufschaufeln des Laufschaufelkranzes 15 liegt.

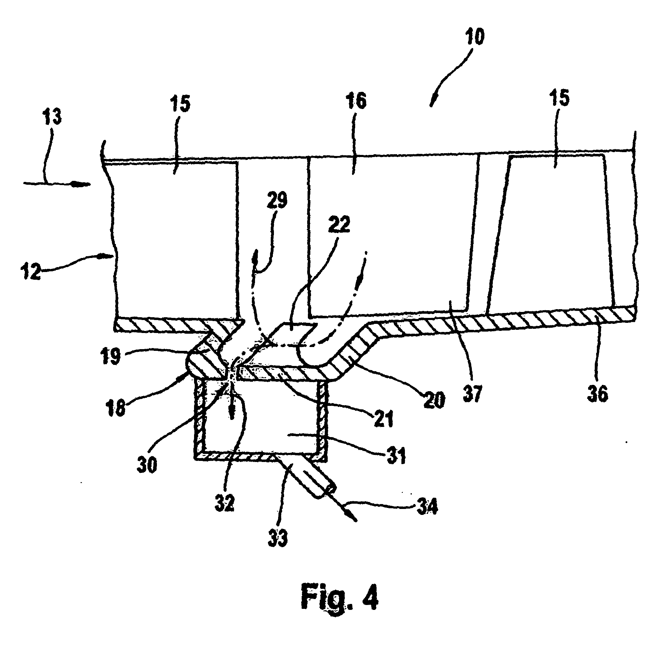

Unter Bezugnahme auf Fig. 1 bis 3 wurde die erfindungsgemäße Strömungsstruktur am Beispiel einer ein Casing Treatment bildenden Ringkammer beschrieben. Wie bereits erwähnt, ist die erfindungsgemäße Strömungsstruktur auch im Bereich nabenseitiger Enden von feststehenden Leitschaufeln eines Leitschaufelkranzes unter Bildung eines sogenannten Hub Treatments einsetzbar. So zeigt Fig. 4 einen Teillängsschnitt durch einen Verdichter, bei welchem die erfindungsgemäße Strömungsstruktur im Bereich einer Nabe eines Verdichterrotors als Hub Treatments ausgebildet ist.

Fig. 4 zeigt wiederum einen Verdichter 10 in Axialbauweise, wobei in dem Hauptströmungskanal 12 des Verdichters 10 in axialer Richtung hintereinander mehrere feststehende Leitschaufelkränze sowie mehrere rotierende Laufschaufelkränze angeordnet sind. Fig. 4 zeigt diesbezüglich einen Laufschaufelkranz 15, wobei in Strömungsrichtung hinter diesem Laufschaufelkranz 15 ein Leitschaufelkranz 16 und in Strömungsrichtung hinter dem Leitschaufelkranz 16 wiederum ein Laufschaufelkranz 15 positioniert ist. Der Hauptströmungskanal 12 wird nabenseitig von einer Außenkontur einer Nabe 36 begrenzt.

Im Unterschied zum Ausführungsbeispiel der Fig. 1 bis 3 ist beim Ausführungsbeispiel der Fig. 4 die Ringkammer 18 nicht radial außen gehäuseseitig sondern vielmehr radial innen nabenseitig ausgebildet. Die Ringkammer 18 ist dabei freien Enden 37 der feststehenden Leitschaufeln des Leitschaufelkranzes 16 zugeordnet. Da hinsichtlich der übrigen Details die nabenseitige Strömungsstruktur des Ausführungsbeispiels der Fig. 4 mit der gehäuseseitigen Strömungsstruktur des Ausführungsbeispiels der Fig. 1 bis 3 übereinstimmt, werden zur Vermeidung unnötiger Wiederholungen für gleiche Baugruppen gleiche Bezugsziffern verwendet. Es kann auf die Ausführungen zum Ausführungsbeispiel der Fig. 1 bis 3 verwiesen werden.

Mithilfe der erfindungsgemäßen Strömungsstruktur für einen Turboverdichter ist demnach einerseits eine Rezirkulation innerhalb des Hauptströmungskanals und andererseits eine Zirkulation aus dem Hauptströmungskanal heraus in eine Verdichtervorkammer möglich. Dies wird durch die erfindungsgemäß ausgebildete Ringkammer ermöglicht. Die erfindungsgemäße Strömungsstruktur bewirkt eine Optimierung des Pumpgrenzabstands des Turboverdichters. Sie ist sowohl bei Turboverdichtern in Axialbauweise als auch bei Turboverdichtern in Diagonalbauweise oder Radialbauweise einsetzbar. Die erfindungsgemäße Strömungsstruktur findet bevorzugt Verwendung in Flugtriebwerken oder auch stationären Gasturbinen.

## Patentansprüche

1. Strömungsstruktur für einen Turboverdichter, insbesondere für einen Verdichter einer Gasturbine, mit mindestens einer Ringkammer (18), die konzentrisch zu einer Achse (17) des Turboverdichters im Bereich von freien Schaufelenden (36; 37) eines Schaufelkranzes (15; 16) angeordnet ist und die radial an einen Hauptströmungskanal (12) angrenzt, wobei die Ringkammer (18) von einer vorderen, stromaufwärtigen Wand (19), einer hinteren, stromabwärtigen Wand (20) und einer im Wesentlichen axial verlaufenden Wand (21) begrenzt ist, wobei in der Ringkammer (18) Leitelemente (22) angeordnet sind, und wobei die Ringkammer (18) in einem vorderen und/oder hinteren Bereich einen Strömungsdurchtritt in Umfangsrichtung ermöglicht, **dadurch gekennzeichnet, dass** im Bereich wenigstens einer der Wände (19, 20, 21) mindestens eine Öffnung (30) angeordnet ist, die einen Strömungsdurchtritt aus der Ringkammer (18) heraus ermöglicht, und dass mindestens eine Verdichterkammer (31) zur Aufnahme dieser austretenden Strömung vorhanden ist.

2. Strömungsstruktur nach Anspruch 1, **dadurch gekennzeichnet, dass** in der im Wesentlichen axial verlaufenden Wand (21) der Ringkammer (18) in einem stromaufwärtigen Bereich derselben mindestens eine Öffnung (30) angeordnet ist, wobei die oder jede Öffnung (30) einen Strömungsdurchtritt in radialer Richtung aus der Ringkammer (18) heraus in die Verdichterkammer (31) ermöglicht.

3. Strömungsstruktur nach Anspruch 1 oder 2, **dadurch gekennzeichnet, dass** die Verdichterkammer (31) eine Austrittsöffnung (33) aufweist, über die in die Verdichterkammer (31) aus der Ringkammer (18) einströmende Luft aus der Verdichterkammer (31) abführbar ist.

4. Strömungsstruktur nach einem oder mehreren der Ansprüche 1 bis 3, **dadurch gekennzeichnet, dass** die Verdichterkammer (31) radial an die Ringkammer (18) angrenzt.

5. Strömungsstruktur nach einem oder mehreren der Ansprüche 1 bis 4, **dadurch gekennzeichnet, dass** die Ringkammer (18) im Bereich gehäuseseitiger Enden (35) von Laufschaufeln (15) angeordnet ist, und dass die Verdichterkammer (31) die Ringkammer (18) radial außen umschließt.

6. Strömungsstruktur nach einem oder mehreren der Ansprüche 1 bis 5, **dadurch gekennzeichnet, dass** die Ringkammer (18) im Bereich nabenseitiger Enden (37) von Leitschaufeln (16) angeordnet ist, und dass die Verdichterkammer (31) die Ringkammer (18) radial innen umschließt.

7. Strömungsstruktur nach einem oder mehreren der Ansprüche 1 bis 6, **dadurch gekennzeichnet, dass** die Leitelemente (22) einerseits in vorwiegend axialer Richtung verlaufende Strömungskanäle (27) und andererseits mindestens einen in Umfangsrichtung verlaufenden Strömungskanal (28) begrenzen, wobei die oder jede Öffnung (30) an einem stromaufwärtsliegenden Ende der in axialer Richtung verlaufenden Strömungskanäle (27) in der im Wesentlichen axial verlaufenden Wand (21) angeordnet ist.

8. Strömungsstruktur nach einem oder mehreren der Ansprüche 1 bis 7, **dadurch gekennzeichnet, dass** die Leitelemente (22) in axialer Blickrichtung in Umfangsrichtung um einen Winkel (β) geneigt oder in Umfangrichtung gekrümmt sind.

9. Strömungsstruktur nach Anspruch 8, **dadurch gekennzeichnet, dass** der Winkel (β) so gewählt ist, dass der Strömungseintritt aus dem Hauptströmungskanal (12) in die Ringkammer (18) strömungstechnisch erleichtert ist.

10. Strömungsstruktur nach einem oder mehreren der Ansprüche 1 bis 9, **dadurch gekennzeichnet, dass** dem Hauptströmungskanal (12) zugewandte Enden der Leitelemente (22) auf und/oder nahe bei einer Kontur des Hauptströmungskanals (12) verlaufen und axial mit den freien Schaufelenden überlappen oder axial an den Bereich der freien Schaufelenden angrenzen.

11. Strömungsstruktur nach Anspruch 10, **dadurch gekennzeichnet, dass** die dem Hauptströmungskanal (12) zugewandten Enden der Leitelemente (22) in radialer Richtung einen solchen Abstand von den freien Schaufelenden des Turboverdichters aufweisen, dass im Normalbetrieb des Turboverdichters die Leitelemente (22) die freien Schaufelenden nicht berühren.

12. Strömungsstruktur nach einem oder mehreren der Ansprüche 1 bis 11, **dadurch gekennzeichnet, dass** die Leitelemente (22) schaufelartig, räumlich gekrümmt, mit variierender Dicke und definierten Profilschnitten ausgeführt sind.

13. Strömungsstruktur nach einem oder mehreren der Ansprüche 1 oder 12, **dadurch gekennzeichnet, dass** die Ringkammer (18), die Leitelemente (22) und die Verdichterkammer (31) in ein Gehäuse (11) des Turboverdichters integriert sind.

14. Strömungsstruktur nach einem oder mehreren der Ansprüche 1 oder 13, **dadurch gekennzeichnet, dass** die Ringkammer (18), die Leitelemente (22) und die Verdichterkammer (31) in eine Nabe (36) des Turboverdichters integriert sind.

15. Strömungsstruktur nach einem oder mehreren der Ansprüche 1 oder 14, **dadurch gekennzeichnet, dass** die axiale Mitte der Ringkammer (18) stromaufwärts der axialen Mitte des zugeordneten Schaufelkranzes (15; 16) liegt.

16. Strömungsstruktur nach Anspruch 15, **dadurch gekennzeichnet, dass** die axiale Mitte der Ringkammer (18) an der zugeordneten Hauptströmungskanalwand stromaufwärts der axialen Mitte der freien Schaufelenden des zugeordneten Schaufelkranzes (15; 16) liegt.

17. Turboverdichter in Axialbauweise und/oder Diagonalbauweise und/oder Radialbauweise, mit mindestens einer Strömungsstruktur nach einem oder mehreren der Ansprüche 1 bis 16.

18. Flugtriebwerk, mit einem Turboverdichter nach Anspruch 17.

19. Stationäre Gasturbine, mit einem Turboverdichter nach Anspruch 17.

## Claims

1. Flow structure for a turbocompressor, in particular for a compressor of a gas turbine, with at least one annular chamber (18) arranged concentrically to an axis (17) of the turbocompressor in the area of free blade ends (36; 37) of a blade ring (15; 16) and radially adjacent to a main flow channel (12), the annular chamber (18) being delimited by a forward, upstream wall (19), a rear, downstream wall (20) and a wall (21) that extends essentially axially, guide elements (22) being arranged in the annular chamber (18) and the annular chamber (18) enabling a flow throughput in the circumferential direction in a forward and/or rear area, **characterised in that** in the area of at least one of the walls (19, 20, 21) at least one aperture (30) is arranged, which enables a flow throughput to emerge from the annular chamber (18), and at least one compressor chamber (31) is present to receive this emerging flow throughput.

2. Flow structure according to Claim 1, **characterised in that** at least one aperture (30) is located in an upstream area of the wall (21) of the annular chamber (18) which extends essentially axially, such that the (or each) aperture (30) enables a flow throughput in the radial direction out of the annular chamber (18) into the compressor chamber (31).

3. Flow structure according to Claims 1 or 2, **characterised in that** the compressor chamber (31) has an outlet opening (33) through which the air flowing into the compressor chamber (31) from the annular chamber (18) can emerge from the compressor chamber (31).

4. Flow structure according to one or more of Claims 1 to 3, **characterised in that** the compressor chamber (31) is radially adjacent to the annular chamber (18).

5. Flow structure according to one or more of Claims 1 to 4, **characterised in that** the annular chamber (18) is arranged in the area of ends (35) of rotor blades (15) on the casing side, and the compressor chamber (31) encloses the annular chamber (18) radially on the outside.

6. Flow structure according to one or more of Claims 1 to 5, **characterised in that** the annular chamber (18) is arranged in the area of ends (37) of guide vanes (16) on the hub side, and the compressor chamber (31) surrounds the annular chamber (18) radially on the inside.

7. Flow structure according to one or more of Claims 1 to 6, **characterised in that** the guide elements (22) delimit on the one hand flow channels (27) that extend predominantly in the axial direction, and on the other hand at least one flow channel (28) that extends in the circumferential direction, and the (or each) aperture (30) is arranged at an upstream end of the axially extending flow channels (27) in the wall (21) that extends essentially axially.

8. Flow structure according to one or more of Claims 1 to 7, **characterised in that**, viewed in the axial direction, the guide elements (22) are inclined in the circumferential direction by an angle (β) or are curved in the circumferential direction.

9. Flow structure according to Claim 8, **characterised in that** the angle (β) is chosen such that the flow entry from the main flow channel (12) into the annular chamber (18) is facilitated.

10. Flow structure according to one or more of Claims 1 to 9, **characterised in that** the ends of the guide elements (22) near the main flow channel (12) extend on and/or close to a contour of the main flow channel (12) and overlap axially with the free ends of the blades or are axially adjacent to the area of the free ends of the blades.

11. Flow structure according to Claim 10, **characterised in that** the ends of the guide elements (22) near the main flow channel (12) are spaced in the radial direction a distance away from the free ends of the blades of the turbocompressor such that, during normal operation of the turbocompressor, the guide elements (22) do not contact the free blade ends.

12. Flow structure according to one or more of Claims 1 to 1, **characterised in that** the guide elements (22) are made in the manner of blades, spatially curved, of varying thickness and with a defined profile cross-section.

13. Flow structure according to one or more of Claims 1 or 12, **characterised in that** the annular chamber (18), the guide elements (22) and the compressor chamber (31) are integrated in a housing (11) of the turbocompressor.

14. Flow structure according to one or more of Claims 1 or 13, **characterised in that** the annular chamber (18), the guide elements (22) and the compressor chamber (31) are integrated in a hub (36) of the turbocompressor.

15. Flow structure according to one or more of Claims 1 or 14, **characterised in that** the axial centre of the annular chamber (18) is located upstream from the axial centre of the associated blade ring (15; 16).

16. Flow structure according to Claim 15, **characterised in that** the axial centre of the annular chamber (18) is located on the associated wall of the main flow channel upstream from the axial centre of the free blade ends of the associated blade ring (15; 16).

17. Turbocompressor of axial and/or diagonal and/or radial design, with at least one flow structure according to one or more of Claims 1 to 16.

18. Aircraft engine with a turbocompressor according to Claim 17.

19. Stationary gas turbine with a turbocompressor according to Claim 17.

## Revendications

1. Structure d'écoulement pour un turbocompresseur, en particulier pour un compresseur d'une turbine à gaz, comprenant au moins une chambre annulaire (18) concentrique à un axe (17) du turbocompresseur dans la zone d'extrémités d'aubes libres (36 ; 37) d'une couronne d'aubes (15 ; 16) et adjacente radialement à un canal d'écoulement principal (12), la chambre annulaire (18) étant délimitée par une paroi (19) amont avant, une paroi (20) aval arrière et une paroi (21) s'étendant pour l'essentiel axialement, avec des éléments de direction (22) dans la chambre annulaire (18), la chambre annulaire (18) permettant un passage d'écoulement dans la direction périphérique dans une zone avant et/ ou arrière,
**caractérisée en ce que**
dans la zone d'au moins l'une des parois (19, 20, 21) au moins une ouverture (30) permet un passage d'écoulement hors de la chambre annulaire (18), avec au moins une chambre de compression (31) pour recevoir cet écoulement sortant.

2. Structure d'écoulement selon la revendication 1,
**caractérisée en ce que**
la paroi (21) de la chambre annulaire (18) s'étendant pour l'essentiel axialement comporte au moins une ouverture (30) dans une zone amont, la ou chaque ouverture (30) permettant un passage d'écoulement dans la direction radiale de la chambre annulaire (18) vers la chambre de compression (31).

3. Structure d'écoulement selon la revendication 1 ou 2,
**caractérisée en ce que**
la chambre de compression (31) présente une ouverture de sortie (33) pour évacuer l'air arrivant de la chambre annulaire (18) dans la chambre de compression (31).

4. Structure d'écoulement selon l'une quelconque ou plusieurs des revendications 1 à 3,
**caractérisée en ce que**
la chambre de compression (31) est raccordée radialement à la chambre annulaire (18).

5. Structure d'écoulement selon l'une quelconque ou plusieurs des revendications 1 à 4,
**caractérisée en ce que**
la chambre annulaire (18) est disposée dans la zone d'extrémités (35) côté boîtier d'aubes mobiles (15), et la chambre de compression (31) entoure la chambre annulaire (18) radialement à l'extérieur.

6. Structure d'écoulement selon l'une quelconque ou plusieurs des revendications 1 à 5,
**caractérisée en ce que**
la chambre annulaire (18) est disposée dans la zone d'extrémités (37) côté moyeu d'aubes directrices (16), et la chambre de compression (31) entoure la chambre annulaire (18) radialement à l'intérieur.

7. Structure d'écoulement selon l'une quelconque ou plusieurs des revendications 1 à 6,
**caractérisée en ce que**
les éléments de direction (22) délimitent d'une part des canaux d'écoulement (27) s'étendant principalement dans la direction axiale et d'autre part au moins un canal d'écoulement (28) s'étendant dans la direction périphérique, et la ou chaque ouverture (30) est disposée à une extrémité amont des canaux d'écoulement (27) s'étendant en direction axiale, dans la paroi (21) étendue pour l'essentiel axialement.

8. Structure d'écoulement selon l'une quelconque ou plusieurs des revendications 1 à 7,
**caractérisée en ce que**
vus dans la direction axiale les éléments de direction (22) sont inclinés dans la direction périphérique d'un angle (β) ou courbes dans la direction périphérique.

9. Structure d'écoulement selon la revendication 8,
**caractérisée en ce que**
l'angle (β) est choisi pour faciliter du point de vue de la technique des fluides l'entrée d'écoulement du canal d'écoulement principal (12) dans la chambre annulaire (18).

10. Structure d'écoulement selon l'une quelconque ou plusieurs des revendications 1 à 9,
**caractérisée en ce que**
des extrémités des éléments de direction (22) tournées vers le canal d'écoulement principal (12) s'étendent sur et/ou à proximité d'un contour du canal d'écoulement principal (12) et chevauchent axialement avec les extrémités d'aubes libres ou sont adjacentes axialement à la zone des extrémités d'aubes libres.

11. Structure d'écoulement selon la revendication 10,
**caractérisée en ce que**
dans la direction radiale les extrémités des éléments de direction (22) tournées vers le canal d'écoulement principal (12) sont écartées des extrémités d'aubes libres du turbocompresseur lorsque le turbocompresseur fonctionne normalement, pour que les éléments de direction (22) ne touchent pas les extrémités d'aubes libres.

12. Structure d'écoulement selon l'une quelconque ou plusieurs des revendications 1 à 11,
**caractérisée en ce que**
les éléments de direction (22) sont courbés dans l'espace et présentent une épaisseur variable et des profils définis.

13. Structure d'écoulement selon l'une quelconque ou plusieurs des revendications 1 ou 12,
**caractérisée en ce que**
la chambre annulaire (18), les éléments de direction (22) et la chambre de compression (31) sont intégrés dans un boîtier (11) du turbocompresseur.

14. Structure d'écoulement selon l'une quelconque ou plusieurs des revendications 1 ou 13,
**caractérisée en ce que**
la chambre annulaire (18), les éléments de direction (22) et la chambre de compression (31) sont intégrés dans un moyeu (36) du turbocompresseur.

15. Structure d'écoulement selon l'une quelconque ou plusieurs des revendications 1 ou 14,
**caractérisée en ce que**
le centre axial de la chambre annulaire (18) se situe en amont du centre axial de la couronne d'aubes (15 ; 16) associée.

16. Structure d'écoulement selon la revendication 15,
**caractérisée en ce que**
le centre axial de la chambre annulaire (18) se situe sur la paroi de canal d'écoulement principal associée en amont du centre axial des extrémités d'aubes libres de la couronne d'aubes (15 ; 16) associée.

17. Turbocompresseur de type axial et/ou diagonal et/ou radial, comprenant au moins une structure d'écoulement selon l'une quelconque ou plusieurs des revendications 1 à 16.

18. Groupe motopropulseur, comprenant un turbocompresseur selon la revendication 17.

19. Turbine à gaz stationnaire, comprenant un turbocompresseur selon la revendication 17.
